# EUROPÄISCHE PATENTSCHRIFT

(11) **EP 0 472 853 B1**
(45) Veröffentlichungstag und Bekanntmachung des Hinweises auf die Patenterteilung: **11.08.1993**
(21) Anmeldenummer: 91110730.8
(22) Anmeldetag: 28.06.1991
(51) Int. Cl.: B01J 37/34, B01J 23/96, B01J 23/46

(54) **Verfahren zur Reaktivierung von desaktivierten Hydrierkatalysatoren**
Desactivated hydrogenation catalyst reactivation process
Procédé de réactivation d'un catalyseur d'hydrogénation désactivé

(30) Priorität: 30.08.1990 DE 4027419
(43) Veröffentlichungstag der Anmeldung: 04.03.1992
(73) Patentinhaber: HÜLS AKTIENGESELLSCHAFT, 45764 Marl (DE)
(72) Erfinder: Wachholz, Gerhard, Dr., W-4370 Marl (DE); Thelen, Gerhard, Dr., W-4405 Nottuln (DE); Voges, Heinz-Werner, Dr., W-4270 Dorsten (DE)

(56) Entgegenhaltungen:
- EP-A- 0 154 408
- FR-A- 2 400 368
- GB-A- 1 267 354
- US-A- 4 572 439
- US-A- 4 914 256

## Beschreibung

Die Erfindung betrifft die Reaktivierung von in ihrer Wirkung geschwächten oder unwirksam gewordenen Hydrierkatalysatoren, die als Metall Ruthenium, das auf Aluminiumoxid als Trägermaterial aufgebracht ist, enthalten, durch eine Behandlung mit Ultraschall.

Es ist bekannt, daß Ruthenium, das auf Aluminiumoxid aufgebracht ist, als Katalysator für die Hydrierung von ungesättigten Kohlenwasserstoffen wie auch von aliphatischen Aldehyden und Ketonen geeignet ist. Wie in dem Kompendium Houben-Weyl, Methoden der organischen Chemie, Band 4/1c, S. 20 beschrieben wird, haben die an Ru/Al₂O₃ erhaltenen Hydrierprodukte von an der Doppelbindung mehrfach substituierten ungesättigten Cycloolefinen bevorzugt die cis-Konfiguration, wenn die Hydrierung unter bestimmten Temperatur- und Druckbedingungen erfolgt. Beispielhaft wird hier die Hydrierung von α-Pinen zu cis-Pinan genannt.

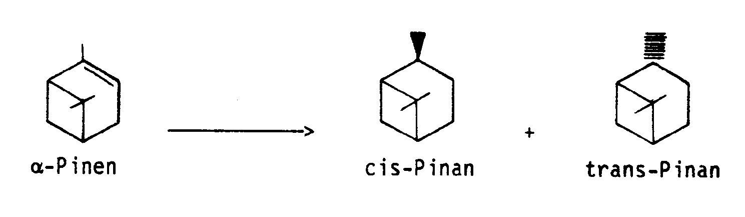

Bekannt ist aber auch, daß die katalytische Aktivität von Ru/Al₂O₃ sich im praktisch-technischen Gebrauch, z. B. bei Anordnung im Festbett in einem kontinuierlich von olefinischer Verbindung und Wasserstoff durchströmten Hydrierreaktor, relativ schnell vermindert, was bis zum völligen Verlust der Aktivität führen kann. Die Aktivitätsverminderung findet auch statt, wenn sogenannte Katalysatorgifte - das sind im allgemeinen Verbindungen, die Heteroatome mit freien Elektronenpaaren wie Cl, Br, J, S, Se, Te, N, P, Sb, As enthalten und als Verunreinigungen in dem zu hydrierenden Substrat, in eventuell mitverwendetem Lösemittel oder Trägergasen oder im gasförmigen Wasserstoff in Spuren zugegen sein können - völlig ferngehalten werden.

Herkömmliche Maßnahmen, dem Nachlassen der Hydrieraktivität der Ru/Al₂O₃-Katalysatoren entgegenzuwirken, bestehen darin, Temperatur und Druck zu erhöhen und die pro Zeiteinheit über das Katalysatorfestbett gelenkte Menge an zu hydrierendem Substrat zu verringern. Jedoch haben diese Maßnahmen nur einen zeitlich begrenzten Erfolg, da der Aktivitätsverlust fortschreitet und zudem besonders bei mehrfach anzuhebender Temperatur die Selektivität des Ru/Al₂O₃-Kontaktes zur Bildung von cis-Hydrierprodukten verlorengeht.

Die Verwendung von Ru/Al₂O₃-Katalysatoren zur selektiven Hydrierung ist nach dem Stand der Technik somit limitiert. Ru/Al₂O₃-Katalysatoren, die ihre Aktivität weitgehend oder völlig eingebüßt haben, sind nach äußerem Augenschein unverändert; Verbackungen von Katalysatorkörnern, die auf eine Belegung der Oberfläche mit höhermolekularen oder polymerisierten Nebenprodukten schließen lassen, sind nicht zu erkennen.

Methoden zur Reaktivierung von Hydrierkatalysatoren, die als aktiven Bestandteil Metalle der VIII. Gruppe des Periodensystems enthalten, sind beschrieben worden. Gemäß der US-A-3 256 205 wird z. B. eine Behandlung mit Säurelösungen mit einem pH-Wert von 2 oder darunter vorgenommen. Auf Ru/Al₂O₃-Katalysatoren ist eine solche Säurebehandlung jedoch nicht anwendbar, weil α-Pinen im sauren Medium einer Wagner-Meerwein-Umlagerung unterliegt.

Es war daher Aufgabe der Erfindung, nach einem geeigneten Verfahren zur Reaktivierung desaktivierter Ru/Al₂O₃-Kontakte zu suchen, das die bekannten Nachteile nicht besitzt.

Überraschend wurde nun gefunden, daß Ru/Al₂O₃-Katalystoren durch Einwirkung von Ultraschallwellen leicht und vollständig regeneriert werden können, wodurch insbesondere die Fähigkeit zur stereospezifischen Hydrierung, beispielsweise von α-Pinen zu cis-Pinan, voll wiederhergestellt wird.

Gegenstand der Erfindung ist ein Verfahren zur Regenerierung von desaktivierten Hydrierkatalysatoren, die als aktive Komponente Ruthenium auf einem Aluminiumoxid-Träger enthalten, welches dadurch gekennzeichnet ist, daß die Katalysatoren einer Behandlung mit Ultraschall unterzogen werden.

Die Anwendung von Ultraschall zur Katalysatorregenerierung wird in US-A-4 086 184 beschrieben. Darin werden Hydrocracking-Katalysatoren, die durch Belegung mit Verkokungsprodukten unwirksam geworden sind, mit Ultraschall behandelt, entweder bevor oder nachdem sie bei hohen Temperaturen der Einwirkung eines oxidierenden Gases unterworfen werden.

Ultraschall wurde auch zur Regenerierung von Katalysatoren, die zur Entfernung von NOx aus Rauchgasen eingesetzt werden, verwendet, wie in Khim. Tekhnol. (Kiev) 3, 17-19 (1985) [C.A. 103:146460] und Khim. Promst (Moscow) 9, 549-50 (1985) [C.A. 103:182947] beschrieben, wobei Ultraschall in der Art wirkte, daß staubförmige Anteile des Substrats (Rauchgas), die sich auf dem Katalysator abgelagert hatten, entfernt werden. Da aktivitätsgeminderte oder unwirksam gewordene Ru/Al₂O₃-Katalysatoren keinerlei Anzeichen für eine Belegung mit Verunreinigungen oder höhermolekularen, nicht mehr löslichen Neben- oder Folgeprodukten des Substrats aufweisen, war die regenerierende Wirkung einer Behandlung mit Ultraschall unvorhersehbar und überraschend. Die Ursache dieser Wirkung ist möglicherweise darin zu sehen, daß Ultraschall die Strukturform (Kristallstruktur) des aktivitätsgeminderten oder unwirksam gewordenen Ru/Al₂O₃-Katalysators in der Weise verändert, daß die aktive Form wiederhergestellt wird.

Die praktische Ausführung der Ultraschallbehandlung gestaltet sich sehr einfach. Der Ru/Al₂O₃-Katalysator wird in einem geeigneten flüssigen Medium der Einwirkung von Ultraschall ausgesetzt. Geeignet sind alle Medien, die den Katalysator nicht chemisch verändern und keine Ablagerungen auf der Katalysatoroberfläche hinterlassen. Als flüssiges Medium wird vorzugsweise der zu hydrierende Kohlenwasserstoff oder sein Hydrierprodukt verwendet. Es ist dabei sehr vorteilhaft, daß eine Nachbehandlung zur Entfernung eines systemfremden Stoffes entfallen kann.

Die Ultraschallbehandlung kann periodisch außerhalb des Hydrierreaktors in einem Ultraschallbad erfolgen, sobald ein Nachlassen der Hydrieraktivität bemerkt wird. Wird die Ultraschallbehandlung außerhalb des Hydrierreaktors in dem zu hydrierenden Substrat oder seinem Hydrierprodukt vorgenommen, so ist anschließend keine besondere Nachbehandlung des regenerierten Ru/Al₂O₃-Katalysators erforderlich. Der Katalysator kann z. B. direkt dem Ultraschallbad entnommen und ohne Trocknung, Calcinierung oder dergleichen wieder in den Hydrierreaktor eingeführt werden.

Selbstverständlich ist auch eine an Ort und Stelle im Hydrierreaktor fest eingebaute Ultraschallquelle zur regenerativen Behandlung in Erwägung zu ziehen. Es ist dann eine Behandlung während der laufenden Hydrierung möglich. Kurze und periodisch zu wiederholende Ultraschallbehandlungen reichen dann aus, um eine Nachlassen der Hydrierleistung zu unterbinden.

Die mit der Erfindung erzielten Vorteile bestehen insbesondere darin, daß völlig desaktivierte Ru/Al₂O₃-Katalysatoren nach einem kostengünstigen Verfahren so regeneriert werden, daß sie in ihren Leistungen mit neuwertigen Kontakten vergleichbar sind.

Die Ultraschallquellen sollten eine Frequenz von 18 bis 500 KHz haben, im allgemeinen reichen die Bereiche um 20 KHz völlig aus. Die Schallintensität sollte zwischen 10 und 100 W/cm² liegen. Einsetzbar sind alle handelsüblichen Ultraschallquellen, so z. B. Ultraschallstäbe für die regenerative Behandlung im Hydrierreaktor und Ultraschallbäder für die Behandlung außerhalb des Reaktors.

Der Zeitraum, der für eine Reaktivierung des desaktivierten Katalysators benötigt wird, kann zwischen 10 Minuten und 10 Stunden liegen. Die Dauer hängt von der Stärke der Desaktivierung ab, doch reichen Ultraschallbehandlungen von ca. 60 min in den meisten Fällen aus. Generell nimmt die Dauer der Ultraschallbehandlung mit abnehmender Leistung der Ultraschallquelle zu.

Die Temperatur während der Ultraschallbehandlung muß so gewählt werden, daß das flüssige Medium eine hinreichend niedrige Viskosität hat. Bei fest eingebauter Ultraschallquelle entspricht die Temperatur der Hydriertemperatur. Zu hohe Viskositäten des flüssigen Mediums bewirken eine zu starke Abschwächung der Schallintensität.

Die folgenden Ausführungsbeispiele dienen stellvertretend zur weiteren Erläuterung des Verfahrens.

### Beispiel 1

Handelsübliches α-Pinen wurde an einem Katalysator, der 1 % Ruthenium auf Aluminiumoxid enthält (Engelhard-Festbettkontakt TCH 2933) bei 300 bar und 50 °C hydriert. Die Belastung des Katalysators in dem kontinuierlich durchströmten Hydrierreaktor betrug 0,2-0,3 l α-Pinen pro 1 Katalysator und Stunde. Der Restgehalt an α-Pinen nach Austritt aus dem Hydrierreaktor lag bei < 0,1 % und die Selektivität, bezogen auf cis-Pinan bei 95-97 %. Nach 23 Tagen im kontinuierlichen Betrieb trat ein Anstieg des α-Pinen-Gehaltes auf, der innerhalb von 48 Stunden einen Wert von 30,4 % erreichte. Der dem Rektor entnommene Kontakt wurde für 3 Stunden in einem Ultraschallbad behandelt (Lsgm.: α-Pinen) und feucht wieder eingesetzt. Nach einer kurzen Übergangsphase lag der α-Pinengehalt wieder bei < 0,1 %.

### Beispiel 2

Analog zu Beispiel 1 wurde α-Pinen an einem Ru-Katalysator der Fa. Rhone-Poulenc (TC 402, 1 % Ru/Al₂O₃) bei 300 bar und 70 °C hydriert. Der α-Pinen-Restgehalt stieg von anfänglich < 0,1 % nach 17 Tagen bis auf 7,2 % an. Die Behandlung des in seiner Hydrierwirkung geschwächten Kontaktes erfolgte analog Beispiel 1. Danach wurde wieder ein α-Pinen-Restgehalt von < 0,1 % erreicht.

## Patentansprüche

1. Verfahren zur Regenerierung von desaktivierten Hydrierkatalysatoren, die als aktive Komponente Ruthenium auf einem Aluminiumoxid-Träger enthalten,
dadurch gekennzeichnet,
daß die Katalysatoren einer Behandlung mit Ultraschall unterzogen werden.

2. Verfahren nach Anspruch 1,
dadurch gekennzeichnet,
daß die Ultraschallbehandlung in einem flüssigen Medium erfolgt, das keine chemischen Veränderungen des Katalysators hervorruft.

3. Verfahren nach Anspruch 2,
dadurch gekennzeichnet,
daß als flüssiges Medium das zu hydrierende Gut oder Hydrierprodukt verwendet wird.

4. Verfahren nach Anspruch 1,
dadurch gekennzeichnet,
daß die Ultraschallbehandlung außerhalb des Hydrierreaktors in einem Ultraschallbad durchgeführt wird.

5. Verfahren nach Anspruch 1,
dadurch gekennzeichnet,
daß die Ultraschallbehandlung im Hydrierreaktor mittels einer im Reaktor befindlichen Ultraschallquelle durchgeführt wird.

6. Verfahren nach Anspruch 1,
dadurch gekennzeichnet,
daß die Ultraschallquelle eine Sendefrequenz von 18-500 KHz und eine Leistung von 10-100 W/cm² hat.

## Claims

1. A method for regenerating deactivated hydrogenation catalysts containing ruthenium on un aluminium oxide support as the active component, characterized in that the catalysts are subjected to a treatment with ultrasound.

2. A method according to claim 1, characterized in that the ultrasonic treatment occurs in a fluid medium which does not cause any chemical alteration of the catalyst.

3. A method according to claim 2, characterized in that the material to be hydrogenated or the hydrogenated product is used as the fluid medium.

4. A method according to claim 1, characterized in that the ultrasonic treatment is performed outside the hydrogenation reactor in an ultrasonic bath.

5. A method according to claim 1, characterized in that the ultrasonic treatment is performed inside the hydrogenation reactor by means of an ultrasound source located in the reactor.

6. A method according to claim 1, characterized in that the ultrasound source has an emission frequency of 18-500 KHz and a power output of 10-100 W/cm².

## Revendications

1. Procédé de régénération de catalyseurs d'hydrogénation désactivés qui contiennent comme composant actif du Ruthénium sur un support d'oxyde d'Aluminium, caractérisé en ce que l'on soumet les catalyseurs à un traitement par ultra-sons.

2. Procédé selon la revendication 1, caractérisé en ce que le traitement par ultra-sons s'effectue dans un milieu liquide, gui ne cause aucune modification chimique du catalyseur.

3. Procédé selon la revendication 2, caractérisé en ce que comme milieu liquide on utilise le produit à hydrogéner ou le produit d'hydrogénation.

4. Procédé selon la revendication 1, caractérisé en ce que le traitement par ultra-sons est effectué en dehors du réacteur d'hydrogénation dans un bain à ultra-sons.

5. Procédé selon la revendication 1, caractérisé en ce que le traitement par ultra-sons est effectué dans le réacteur d'hydrogénation à l'aide d'une source d'ultra-sons qui se trouve dans le réacteur.

6. Procédé selon la revendication 1, caractérisé en ce que la source d'ultra-sons a une fréquence d'émission de 18 à 500 KHz et une puissance de 10 à 100 w/cm².
